# FASCICULE DE BREVET EUROPEEN

(11) **EP 1 702 662 B1**
(45) Date de publication et mention de la délivrance du brevet: **17.06.2009**
(21) Numéro de dépôt: 06290420.6
(22) Date de dépôt: 15.03.2006
(51) Int. Cl.: B01D 29/15, B01D 29/60

(54) **Système de filtration de liquide avec réchauffage**
Filtrationssystem für Flüssigkeiten mit Heizung
Filtration system for liquids with heater

(30) Priorité: 15.03.2005 FR 0502565
(43) Date de publication de la demande: 20.09.2006
(60) Demande divisionnaire: 09152895.0
(73) Titulaire: FILTRAUTO, 78286 Guyancourt Cedex (FR)
(72) Inventeur: Leclerc, Patrick, 78980 Neauphlette (FR); Fremont, Laurent, 78990 Elancourt (FR); Lalleman, Xavier, 94200 Ivry Sur Seine (FR)
(74) Mandataire: Garel, Régis

(56) Documents cités:
- EP-A- 0 657 198
- EP-A- 0 657 201
- EP-A- 0 662 337
- EP-A- 1 070 530
- EP-A- 1 101 519
- EP-A- 1 188 468
- WO-A-03/076792
- US-A- 3 235 084
- US-A- 4 477 345
- US-A- 5 547 572
- US-B1- 6 248 236

## Description

L'invention se rapporte à un système de filtration de liquide tel que du gazole pour moteur à combustion interne d'un véhicule automobile.

Plus précisément, l'invention concerne en particulier un système de filtration de gazole comprenant des moyens de réchauffage électrique pour permettre un chauffage du gazole qui est susceptible de paraffiner lorsque le véhicule automobile est soumis à des températures très basses. Ce paraffinage du gazole est susceptible d'obstruer l'élément filtrant entraînant donc une perturbation de l'alimentation en gazole du moteur.

Le document US-A-4 477 345 décrit un système de filtration de liquide de ce type comportant :
- une cuve métallique sur laquelle est fixé un couvercle pour former un boîtier délimitant un volume intérieur,
- un élément filtrant disposé dans le volume intérieur du boîtier, ledit élément filtrant présente une forme sensiblement annulaire et comporte une face externe et une face interne, l'élément filtrant définit un espace intérieur creux et délimite une zone d'amont communiquant avec une entrée de liquide et une zone d'aval communiquant avec une sortie de liquide,
- un premier conduit s'étendant dans la zone d'amont et dans l'espace intérieur creux, le premier conduit étant relié de manière étanche à l'entrée de liquide,
- un deuxième conduit s'étendant dans la zone d'aval et relié de manière étanche à la sortie de liquide,
- un espace annulaire s'étendant autour de la face externe de l'élément filtrant,
- des moyens de réchauffage du liquide montés de manière amovible et étanche sur le boîtier, lesdits moyens de réchauffage comprenant un élément chauffant qui s'étend dans l'espace intérieur creux, dans le premier conduit.

La présence de l'élément chauffant dans l'espace intérieur creux permet de réduire l'encombrement du système, procure une bonne diffusion de la chaleur produit par l'élément chauffant et protège l'élément chauffant en cas choc, ce qui réduit le risque de court-circuit.

L'invention vise à proposer un système de filtration présentant en particulier une plus grande robustesse, une bonne efficacité pour réchauffer le liquide et améliorer l'efficacité de séparation de l'eau du liquide à filtrer.

Pour ce faire, conformément à l'invention, l'espace annulaire est relié au premier conduit par un conduit intermédiaire et ledit espace annulaire s'étend dans la zone d'amont, et le deuxième conduit s'étend dans l'espace intérieur creux, de telle sorte que le liquide traverse l'élément filtrant radialement depuis la face externe vers la face interne pour déboucher dans la zone d'aval, et l'entrée de liquide, la sortie de liquide et le conduit intermédiaire sont situés du même côté (au-dessus) par rapport à l'élément filtrant.

La circulation du liquide depuis l'extérieur vers l'intérieur du filtre améliore la séparation eau/liquide à filtrer ou du moins facilite la récupération de l'eau. En outre, le fait d'effectuer la séparation de l'eau en amont de l'élément filtrant réduit le risque que des gouttes d'eau formées par coalescence soient entraînées vers la sortie de liquide et viennent notamment perturber le fonctionnement du moteur ou détériorer les injecteurs.

En outre, après avoir été réchauffé, le liquide traverse donc l'élément filtrant puis ressort dans la zone d'aval, à l'intérieur de l'espace intérieur creux où circule également le liquide (de la zone d'amont) à réchauffer. Par conséquent, le liquide de la zone d'aval contribue à préchauffer le liquide de la zone d'amont avant ou sensiblement en même temps que le liquide de la zone d'aval est réchauffé par l'élément chauffant. Il existe par conséquent une synergie du fait de la présente à la fois du premier conduit, du deuxième conduit et de l'élément chauffant dans l'espace intérieur creux, cette synergie rendant plus efficace le réchauffage du liquide dans la zone d'amont.

Pour une question de disposition dans le véhicule, l'entrée de liquide et la sortie de liquide sont usuellement disposées sur le dessus du système de filtration. En disposant le conduit intermédiaire du même côté que l'entrée et la sortie de liquide par rapport à l'élément filtrant, le conduit intermédiaire va par conséquent se retrouver au-dessus de l'élément filtrant dans le véhicule et le gazole va circuler de haut en bas dans l'espace annulaire avant de traverser le filtre de l'extérieur vers l'intérieur.

Cette configuration améliore la séparation de l'eau du carburant, l'eau étant plus dense que le gazole, sous l'effet de la gravité et parce que la circulation du liquide à filtrer ce fait de haut en bas dans la direction et le sens de la force de pesanteur, l'eau est plus facilement séparée du carburant et se trouve entraînée vers le bas jusqu'à un espace de récupération d'eau formant cuve de décantation disposée en zone d'amont, en partie inférieure de la cuve.

On connaît certes également du document EP-0 657 201 un système de filtration dans lequel le premier conduit et le deuxième conduit s'étendent dans l'espace intérieur creux définit par l'élément filtrant et le liquide traverse l'élément filtrant radialement depuis la face externe vers la face interne, mais l'élément de chauffage n'étant pas disposé dans l'espace intérieur creux, mais au-dessus, le liquide circulant dans le premier conduit ayant déjà été chauffé par l'élément chauffant avant de circuler dans le premier conduit, la synergie obtenue conformément à l'invention n'existe pas dans la réalisation décrite dans EP-0 657 201.

Conformément à l'invention, le système présente en outre avantageusement les caractéristiques suivantes :
- le premier conduit comprend une première portion et une deuxième portion définissant des enceintes,
- la première portion du premier conduit présente une extrémité supérieure reliée à l'entrée de liquide et une extrémité inférieure,
- la deuxième portion du premier conduit présente une extrémité supérieure reliée au conduit intermédiaire et une extrémité inférieure,
- la première portion et la deuxième portion du premier conduit sont séparées par une plaque de séparation présentant un orifice, et
- l'extrémité inférieure de la première portion du premier conduit et l'extrémité inférieure de la deuxième portion du premier conduit sont reliées par l'orifice de la plaque de séparation.

Cette réalisation simple et efficace permet de s'assurer que le liquide va circuler dans le premier conduit, au contact de l'élément chauffant avant de circuler dans le conduit intermédiaire.

Selon une caractéristique complémentaire conforme à l'invention, l'élément chauffant est disposé sur la plaque de séparation pour permettre une double mise en contact du liquide avec les moyens de réchauffage.

On obtient ainsi un échange thermique amélioré entre le fluide circulant dans le premier conduit et l'élément chauffant, la plaque de séparation faisant office de surface d'échange thermique sur ses deux faces. L'échange thermique sera bien entendu d'autant plus efficace que la plaque de séparation sera réalisée dans un matériau présentant de bonnes propriétés de conduction de la chaleur.

Selon une autre caractéristique complémentaire conforme à l'invention, l'élément chauffant est disposé uniquement dans la deuxième portion du premier conduit.

La plaque de séparation formant surface d'échange thermique, le liquide sera d'autant plus efficacement réchauffé s'il vient au contact de l'élément chauffant après avoir été préalablement réchauffé en venant au contact de la plaque de séparation dans la première portion du premier conduit.

Selon encore une autre caractéristique complémentaire conforme à l'invention, l'élément filtrant s'étend entre une extrémité inférieure pourvue d'un flasque inférieur et une extrémité supérieure pourvue d'un flasque supérieur et le conduit intermédiaire s'étend radialement dans l'épaisseur du flasque supérieur.

Cette réalisation est simple et efficace pour mettre en communication le premier conduit et l'espace annulaire.

Selon encore une autre caractéristique complémentaire conforme à l'invention, l'orifice de la plaque de séparation est à proximité de l'extrémité inférieure de l'élément filtrant.

On profite ainsi de toute la hauteur de l'élément filtrant pour réchauffer le liquide au contact de la plaque de séparation.

Selon encore une autre caractéristique complémentaire conforme à l'invention, le système comprend en outre un fourreau renfermant la première portion du premier conduit, la deuxième portion du premier conduit, la plaque de séparation et l'élément chauffant.

On peut ainsi plus aisément séparer en particulier la plaque de séparation et l'élément chauffant par rapport à l'élément filtrant, notamment pour changer l'élément filtrant tout en conservant la plaque de séparation et l'élément chauffant.

Selon encore une autre caractéristique complémentaire conforme à l'invention, le fourreau présente un orifice, la plaque de séparation s'étend au-delà du fourreau en passant de manière étanche à travers l'orifice et porte des moyens de détection d'eau s'étendant à l'extérieur du fourreau, dans un espace de récupération d'eau, ledit espace de récupération d'eau communiquant avec l'espace annulaire et s'étendant dans la zone d'amont, au fond de la cuve.

Ainsi, on peut détecter la présence d'eau issue de la séparation avec le gazole sans surcoût important et séparer aisément les moyens de détection d'eau de l'élément filtrant.

Dans des modes de réalisation préférés de l'invention, on peut éventuellement avoir recours, en outre, à l'une et/ou à l'autre des dispositions prévues aux revendications 10 à 25.

D'autres caractéristiques et avantages de l'invention apparaîtront au cours de la description suivante de plusieurs de ses formes de réalisation, données à titre d'exemple non limitatif, en regard des dessins.

Sur les dessins :
- les figures 1 à 3 représentent des vues en coupe axiale de systèmes de filtration non conformes à l'invention ;
- la figure 4 représente une vue en coupe axiale du système de filtration selon un mode de réalisation de l'invention ;
- la figure 5 représente une variante du mode de réalisation du système de filtration représenté sur la figure 4 ; et
- la figure 6 représente une vue en coupe partielle et agrandie d'un système de dégazage pouvant être intégré dans la variante de réalisation représentée sur la figure 5.

Sur les différentes figures, les mêmes références désignent des éléments identiques ou similaires.

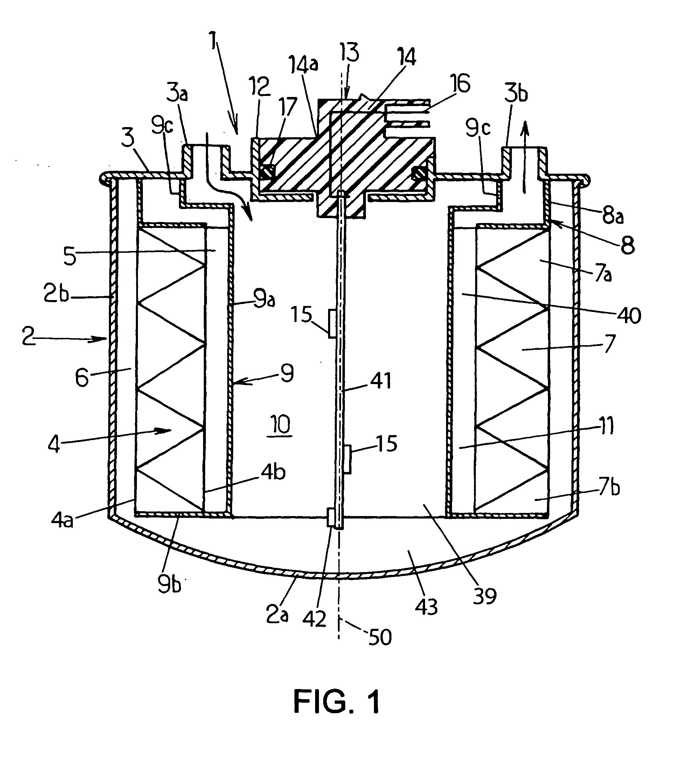

La figure 1 représente un système de filtration 1 de liquide. Ce système de filtration 1 comprend une cuve 2 en métal ou en plastique qui présente un fond 2a à partir duquel s'étend vers le haut une paroi cylindrique 2b s'étendant autour d'un axe de révolution 50 et présentant un rebord supérieur directement solidaire d'un couvercle 3. Ce couvercle 3 présente un bord qui est directement fixé sur le bord circulaire de la cuve métallique 2. Le bord du couvercle peut être, par exemple, serti, soudé, vissé ou collé sur le bord circulaire de la cuve métallique. La cuve métallique 2 ainsi que le couvercle 3 forment donc un boîtier délimitant un volume intérieur dans lequel est disposé un élément filtrant 4 de forme annulaire s'étendant suivant l'axe de révolution 50. L'élément filtrant 4 présente une face externe 4a et une face interne 4b. Sa face interne 4b délimite un espace intérieur creux 5. Sa face externe 4a délimite avec la paroi cylindrique 2b de la cuve métallique 2 un espace annulaire 6. Cet élément filtrant 4 comprend un media filtrant 7 qui s'étend entre une extrémité supérieure 7a et une extrémité inférieure 7b. L'extrémité supérieure 7a du media filtrant 7 est fixée de manière étanche à un flasque supérieur 8. Ce flasque supérieur 8 présente également une forme annulaire avec une ouverture ayant un diamètre sensiblement identique au diamètre interne de l'élément filtrant, et un rebord périphérique externe saillant 8a qui est en contact étanche avec le couvercle 3. Ce couvercle 3 présente également une entrée de liquide 3a ainsi qu'une sortie de liquide 3b pour permettre la circulation et la filtration du liquide à l'intérieur du système de filtration 1 comme cela sera décrit plus en détail ultérieurement.

Le système de filtration 1 comprend en outre un tube séparateur 9 qui est directement disposé dans l'espace intérieur creux 5 de l'élément filtrant 4, ce tube séparateur présentant une paroi cylindrique 9a qui s'étend vers le bas par une paroi horizontale 9b solidaire de manière étanche de l'extrémité inférieure 7b du media filtrant 7. La paroi cylindrique 9a du tube séparateur 9 s'étend également vers le haut par une extrémité supérieure 9c qui est également en contact étanche avec le couvercle 3. Cette extrémité supérieure 9c qui est de forme circulaire est disposée radialement vers l'extérieur par rapport à l'entrée du liquide 3a, tandis qu'elle est disposée radialement vers l'intérieur par rapport à la sortie de liquide 3b.

Le tube séparateur 9, la cuve 2 et l'élément filtrant 4 définissent une zone d'amont 10 qui s'étend entre l'entrée de liquide 3a et la face externe 4a de l'élément filtrant. Le tube séparateur 9 définit en particulier un conduit d'entrée 39 s'étendant dans la zone d'amont et dans l'espace intérieur creux 5 suivant l'axe de révolution 50. La zone d'amont 10 comprend également un espace de récupération d'eau 43 qui s'étend entre l'extrémité inférieure 7b du média filtrant 7 et le fond 2a de la cuve 2. La zone d'amont 10 comprend en outre l'espace annulaire 6. Le conduit d'entrée 39 est par conséquent relié à un extrémité à l'entrée de liquide 3a et à l'autre extrémité à l'espace annulaire par l'intermédiaire de l'espace de récupération d'eau 43 dans lequel le liquide circule radialement vers l'extérieur.

Le tube séparateur 9 et l'élément filtrant 4 définissent également une zone d'aval 11 qui s'étend entre la face interne 4b de l'élément filtrant et la sortie 3b de liquide. La paroi cylindrique 9a du tube séparateur 9 définit en particulier avec la face interne 4b de l'élément filtrant un conduit de sortie 40 s'étendant dans l'espace intérieur creux 5 suivant l'axe de révolution 50. La zone d'aval 11 comprend également le volume défini par l'extrémité supérieure 9c du tube séparateur 9 et le flasque 8 de l'élément filtrant 4, ce volume débouchant directement dans la sortie de liquide 3b.

Le système de filtration 1 préalablement décrit forme donc une unité jetable lorsque l'élément filtrant 4 ne peut plus assurer de manière convenable la filtration du liquide. Cette unité jetable permet de préserver la propreté de l'élément filtrant. La disposition et le montage de manière amovible des moyens de réchauffage permettent aussi de retirer ces derniers de l'unité à jeter et de les redisposer sur une nouvelle unité en les conservant donc d'une unité jetable à l'autre.

Le couvercle 3 présente également une ouverture centrale délimitée par une paroi cylindrique 12 qui forme un logement pour des moyens de réchauffage électrique 13. Ces moyens de réchauffage électrique 13 sont formés par un connecteur 14 directement disposé de manière étanche et amovible dans le logement formé par la paroi 12, ce connecteur étant relié à un élément chauffant 15 qui est porté par une plaque 41 et directement placé dans la zone d'amont 10 du système de filtration. Ce connecteur 14 peut comprendre une pluralité de broches 16 qui sont directement moulées dans une matière plastique et qui sont reliées électriquement à l'élément chauffant 15 placé dans la zone centrale de l'élément filtrant. Par ailleurs, comme on peut le voir sur la figure 1, un joint d'étanchéité 17 peut par exemple assurer l'étanchéité entre la matière plastique du connecteur 14 et la paroi 12 formant l'ouverture centrale du couvercle 3.

La plaque 41 peut par exemple se présenter sous la forme d'une carte électronique comprenant un substrat sur lequel est sérigraphié une ou plusieurs pistes de cuivre tracées en serpentin qui réalisent la fonction chauffage. Le substrat comporte également une autorégulation réalisée par exemple à l'aide d'un transistor de puissance et un circuit de commande dont l'élément de mesure pourrait être une résistance à coefficient de température négative. Selon des variantes de réalisation les pistes chauffantes sérigraphiées sont tracées sur une seule face ou sur les deux faces de la plaque 41. Selon une autre variante de réalisation les pistes chauffantes sérigraphiées sont remplacées par une ou plusieurs pastilles CTP (à coefficient de température positif) 15, de type polymère ou céramique, à coefficient de température positif qui sont également connues sous le nom de résistances auto-régulantes dont la particularité est d'avoir une résistance qui augmente avec la température.

Cette carte électronique 41 présente dans sa partie inférieure deux plaques de cuivre 42 s'étendant dans l'espace de récupération d'eau 43 afin de réaliser un détecteur d'eau au niveau du fond 2a de la cuve métallique 2. Par ailleurs, la carte de circuit imprimé peut également être pourvue de moyens de détection de pression. L'extrémité supérieure de la carte électronique peut également être directement soudée sur les broches du connecteur 14.

La plaque électronique ou la plaque de circuit imprimé 15 utilisée comme moyen de réchauffage électrique peut par exemple être identique à celle décrite dans la demande de brevet français FR 2 868 331.

Ces moyens de réchauffage électrique ne seront donc pas décrits plus en détail dans la suite de la description.

Ainsi, lorsque le liquide ou gazole entre par l'entrée de liquide 3a, le liquide circule au centre du filtre et plus précisément dans le conduit d'entrée 39 en rentrant en contact avec les pistes de cuivre chauffantes ou pastilles CTP 15 réalisées sur la plaque 41 avant d'être dirigé vers le fond 2a de la cuve métallique 2 dans l'espace de récupération d'eau 43. Le liquide ou gazole ainsi réchauffé circule ensuite dans l'espace annulaire 6 délimité par la paroi cylindrique 2b de la cuve 2 et l'élément filtrant 4 avant de traverser radialement cet élément filtrant. On peut noter que le gazole ou liquide ainsi chauffé traverse l'élément filtrant radialement de l'extérieur vers l'intérieur avant de se retrouver dans le conduit de sortie 40. Le gazole ainsi réchauffé et filtré est ensuite évacué via la sortie 3b du système de filtration 1.

La circulation du liquide de l'extérieur vers l'intérieur de l'élément filtrant 4 favorise la séparation du gazole et de l'eau qui y est contenue. L'élément filtrant 4 assure donc la rétention de l'eau tout en permettant une décantation au niveau de l'espace de récupération d'eau 43.

Selon ce premier mode de réalisation du système de filtration conforme à la figure 1, l'extrémité inférieure 7b du média 7 peut également être pourvue d'un flasque inférieur présentant un rebord périphérique interne connecté de manière étanche à l'extrémité inférieure de la paroi cylindrique 9a du tube séparateur 9.

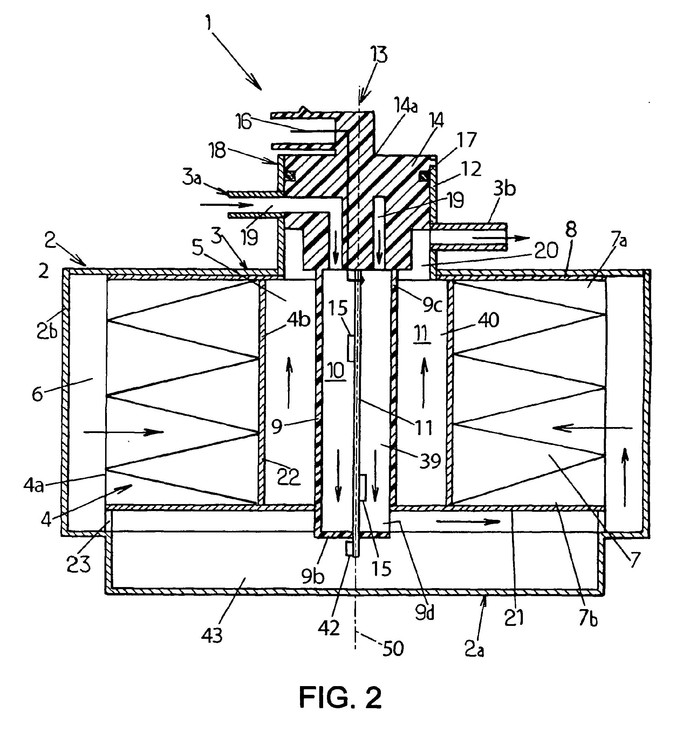

La figure 2 représente un autre mode de réalisation du système de filtration 1, dans lequel l'entrée de liquide 3a ainsi que la sortie de liquide 3b sont formées par des canules métalliques qui sont directement brasées sur une jupe métallique 18 de forme cylindrique et qui est également raccordée de manière étanche dans une ouverture pratiquée sur le couvercle 3. Ce couvercle 3 est également serti sur l'extrémité supérieure de la paroi cylindrique 2b de la cuve métallique 2. Dans cet exemple de réalisation, les moyens de réchauffage électrique 13 comprennent également un connecteur 14 réalisé par exemple en matière plastique dans lequel sont surmoulées des broches 16 qui sont directement raccordées à l'élément chauffant 15 disposé dans la zone d'amont 10 délimitée par le tube séparateur 9.

Par ailleurs, le connecteur 14 présente également un passage 19 qui permet de relier l'entrée de liquide 3a au conduit d'entrée 39, et d'autre part, un passage 20 qui permet de le conduit de sortie 40 à la sortie de liquide 3b.

L'extrémité supérieure du tube séparateur 9 est directement raccordée de manière étanche à la partie inférieure du connecteur 14 de manière à permettre une entrée du liquide à filtrer directement dans la zone d'amont 10 formée par le tube séparateur 9 dans lequel est directement disposé l'élément chauffant 15. Ce tube séparateur 9 forme également un élément de protection pour l'élément chauffant 15 et la carte électronique 41. L'extrémité supérieure du tube séparateur 9 peut être directement réalisée d'une seule pièce avec le connecteur 14 ou alors être fixée de manière étanche, par tout moyen approprié, à la partie inférieure de ce connecteur 14. A titre d'exemple, l'extrémité supérieure du tube séparateur 9 peut être fixée au connecteur 14 par clipsage, soudure, vissage ou collage. Comme on peut le voir sur cette figure 2, la partie inférieure du tube séparateur 9 est fermée axialement tout en présentant une ouverture radiale 9d qui permet au liquide sortant d'être dirigé radialement vers l'extérieur de l'élément filtrant 4.

Le fond du tube séparateur présente également un orifice qui est traversé par l'extrémité inférieure de la carte de circuit imprimé pourvue des moyens de détection d'eau 42 disposés dans l'espace de récupération d'eau 43, au voisinage du fond 2a de la cuve 2.

Par ailleurs, le média filtrant 7 de l'élément filtrant 4 présente également une extrémité supérieure 7a et une extrémité inférieure 7b sur lesquelles sont respectivement raccordés de manière étanche des flasques supérieur 8 et inférieur 21. Le flasque supérieur 8 est également raccordé de manière étanche à la partie inférieure de la jupe 18 tandis que le rebord périphérique interne du flasque inférieur 21 du média filtrant 7 est raccordé de manière étanche à la surface extérieure du tube séparateur 9.

Ainsi, lorsque le liquide ou le gazole entre par l'entrée de liquide 3a, ce liquide circule tout d'abord dans le passage 19 formé dans le connecteur 14 pour déboucher dans le conduit d'entrée 39 dans lequel est disposé l'élément chauffant 15, de manière à faire entrer en contact le liquide avec ledit élément chauffant 15. Le liquide ou gazole ainsi réchauffé sort du tube séparateur 9 par son ouverture radiale 9d pour être ensuite dirigé radialement vers l'extérieur de l'élément filtrant 4. On peut également noter que suivant ce mode de réalisation, le gazole ou liquide ainsi chauffé traverse donc l'élément filtrant 4 radialement de l'extérieur vers l'intérieur avant de se retrouver dans le conduit de sortie 40. Le gazole ainsi réchauffé et filtré est ensuite évacué via le passage 20 réalisé dans le connecteur 14 et la sortie 3b du système de filtration 1.

Comme on peut le voir sur cette figure 2, l'élément filtrant 4 ou plus précisément le média filtrant 7 peut également être pourvu au niveau de sa partie interne d'un tube de rigidification ajouré 22 permettant d'assurer le maintient du média filtrant lors de son fonctionnement ainsi que la circulation du liquide à travers le média filtrant 7.

Par ailleurs, le flasque inférieur 21 de l'élément filtrant 4 peut également être pourvu d'entretoises 23 qui s'étendent vers le bas en direction du fond 2a de la cuve métallique 2 de manière à assurer un espace suffisant entre le flasque inférieur 21 et le fond 2a de la cuve de telle sorte que le liquide puisse se diriger radialement vers l'extérieur de l'espace de récupération d'eau 43 vers l'espace annulaire 6, avant de traverser le média filtrant 7. Ces entretoises 23 peuvent être réalisées à partir d'une matière élastiquement déformable pour assurer le plaquage du flasque supérieur 8 de manière étanche contre le couvercle 3. Pour assurer l'étanchéité entre le flasque supérieur 8 et le couvercle 3, un ressort peut aussi être disposé entre le fond 2a de la cuve et le flasque inférieur 21.

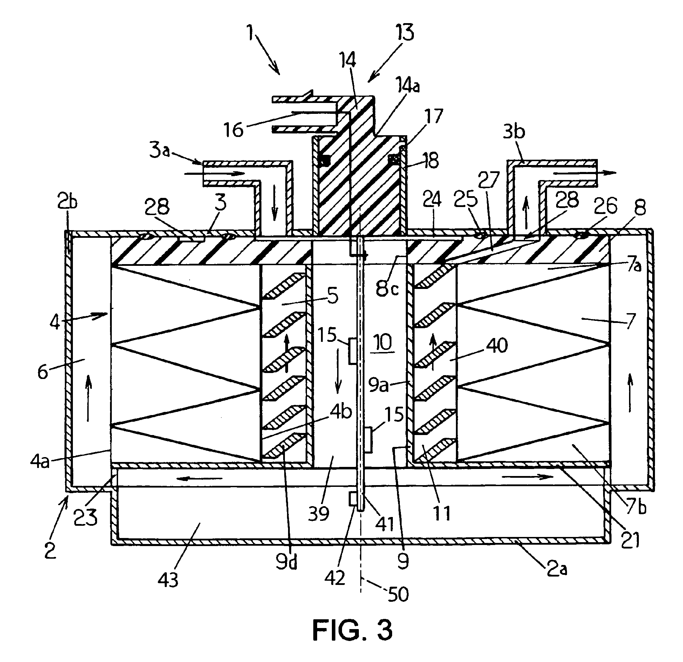

La figure 3 représente un troisième système de filtration 1, dans lequel l'entrée de liquide 3a ainsi que la sortie de liquide 3b sont formées par des canules métalliques qui sont directement raccordées de manière étanche sur le couvercle 3 du système de filtration 1. L'élément filtrant 4 ou plus exactement son média filtrant 7 s'étend toujours entre une extrémité supérieure 7a raccordée de manière étanche à un flasque supérieur 8 et une extrémité inférieure 7b qui est également raccordée de manière étanche à un flasque inférieur 21 dont le rebord périphérique interne est raccordé de manière étanche à l'extrémité inférieure du tube séparateur 9. Comme on peut le voir sur cette figure 3, l'extrémité inférieure du tube séparateur 9 est ouverte en direction du fond 2a de la cuve métallique 2. Par ailleurs, l'extrémité supérieure du tube séparateur 9 est raccordée de manière étanche à la face inférieure du flasque supérieur 8 de l'élément filtrant 4.

Le connecteur 14 des moyens de réchauffage électrique 13 est également disposé de manière étanche et amovible dans une jupe 18 qui est elle-même rapportée de manière étanche sur le couvercle 3. La plaque 41 portant l'élément chauffant 15 des moyens de réchauffage électrique 13 s'étend également axialement à l'intérieur du tube 9 qui définit une partie de la zone d'amont 10. De manière à raccorder le conduit d'entrée 39 à l'entrée de liquide 3a, la surface supérieure du flasque 8 comprend un évidement 24, par exemple circulaire, qui est disposé en regard de l'entrée de liquide 3a pour permettre une circulation du liquide ou gazole à filtrer depuis l'entrée de liquide 3a vers le conduit d'entrée 39. Bien entendu, cet évidement circulaire 24 du flasque communique également avec une ouverture centrale 8c directement réalisée dans le flasque supérieur 8 et qui présente un diamètre sensiblement équivalent au diamètre interne du tube séparateur 9. Par ailleurs, la surface supérieure du flasque 8 est également en contact étanche avec le couvercle 3 par exemple au moyen de joints d'étanchéité 25 et 26 qui assurent une étanchéité entre la zone d'amont 10 et la zone d'aval 11.

De même, le flasque supérieur 8 comprend un conduit de circulation 27 qui s'étend obliquement par rapport à la direction axiale 50 tout en s'étendant sur toute l'épaisseur du flasque supérieur 8. Ce conduit de circulation permet de raccorder de manière étanche la sortie de liquide 3b au conduit de sortie 40. La surface supérieure du flasque 8 peut également être pourvue d'une rainure circulaire 28 qui forme avec le couvercle 3 un canal circulaire étanche destiné à être disposée en regard de la sortie de liquide 3b et qui est également en communication avec l'extrémité supérieure du conduit de circulation 27 de telle sorte que l'élément filtrant ne soit pas nécessairement indexé angulairement par rapport au couvercle 3 lors de l'assemblage du système de filtration 1.

Le flasque inférieur 21 peut également être pourvu d'entretoises 23 de manière à laisser un espace suffisant entre le flasque inférieur 21 et le fond 2a de la cuve pour permettre au liquide ou gazole chauffé de se diriger radialement vers l'extérieur de l'espace de récupération d'eau 43 vers l'espace annulaire 6 avant de traverser l'élément filtrant 4 de l'extérieur vers l'intérieur et de déboucher dans le conduit de sortie 40 puis d'être évacué par la sortie de liquide 3b.

Par ailleurs, comme on peut le voir sur cette figure 3, le tube séparateur 9 peut également être pourvu au niveau de sa surface extérieure d'un filet hélicoïdal 9e disposé dans le conduit de sortie 40 de manière à permettre une circulation en spirale du liquide ou gazole chauffé puis filtré avant de déboucher dans la sortie de liquide 3b via le conduit de circulation 27 directement réalisé dans le flasque supérieur 8. Ce tube séparateur 9 pourvu d'un filet hélicoïdal 9e sert à supporter (centrer) le média filtrant 7 tout en assurant un passage annulaire pour le liquide filtré.

Par ailleurs, la rainure circulaire 28 qui forme un canal circulaire avec le couvercle 3 est disposée entre les joints d'étanchéité 25 et 26 de manière à assurer une étanchéité entre la zone d'amont 10 et la zone d'aval 11.

Les joints d'étanchéité 25, 26 peuvent être remplacés par des bourrelets d'étanchéité s'étendant axialement à partir du flasque supérieur 8.

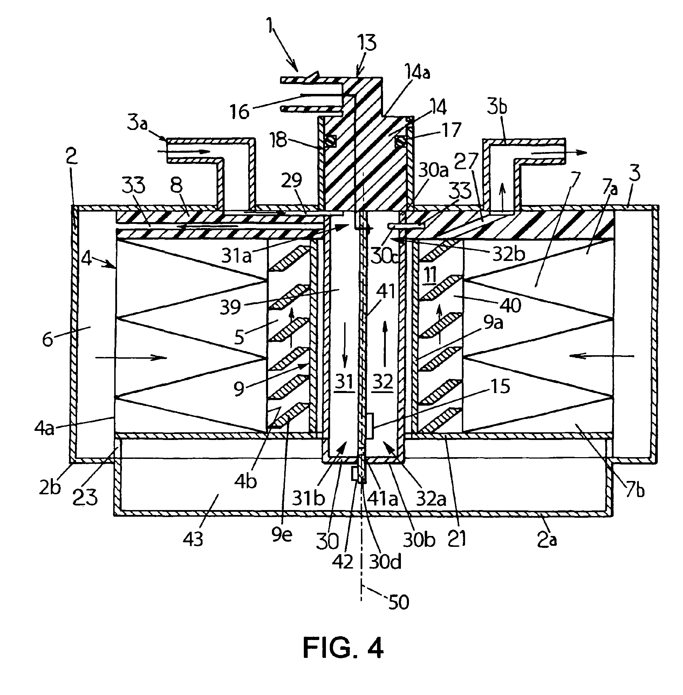

La figure 4 représente un mode de réalisation du système de filtration 1 conforme à l'invention.

Ce système de filtration 1 représenté sur la figure 4 diffère de celui représenté sur la figure 3 en ce sens qu'un fourreau 30 est directement disposé à l'intérieur du tube séparateur 9. Le fourreau 30 peut être réalisé en plastique. Ce fourreau 30 présente une extrémité supérieure 30a qui est raccordée de manière étanche à l'entrée de liquide 3a via une ouverture circulaire ou un passage 29 réalisé sur la surface supérieure du flasque 8 et une extrémité inférieure fermée 30b. Le conduit d'entrée 39 s'étend à l'intérieur du fourreau, ainsi que la plaque 41 séparant le conduit d'entrée 39 en deux enceintes 31, 32 qui permettent une double mise en contact du liquide avec la plaque 41 portant l'élément chauffant 15 de manière à augmenter la surface d'échange thermique et ainsi améliorer l'efficacité du réchauffage du carburant. Ce fourreau 30 peut être monté solidaire sur le connecteur 14 par clipsage, soudage, vissage ou collage. Ce fourreau 30 assure ainsi la protection des moyens de réchauffage 13 lorsque ces derniers sont retirés de la jupe 18. Dans ce mode de réalisation, la plaque 41 peut également être réalisé par une plaque de circuit imprimé comportant au moins une pastille de résistance CTP chauffante ou au moins une piste sérigraphiée chauffante tracée en serpentin disposée dans l'enceinte 32. L'extrémité inférieure de cette plaque 41 présente un orifice 41a pour permettre une double circulation du liquide à la fois dans l'enceinte 31 et dans l'enceinte 32.

L'enceinte 31 présente une extrémité supérieure amont 31a reliée à l'entrée de liquide 3a et une extrémité inférieure aval 31b. L'enceinte 32 présente une extrémité supérieure aval 32b reliée à un canal 33 et une extrémité inférieure 32a reliée à extrémité inférieure aval 31b de l'enceinte 31 par l'orifice 41a. Le liquide circule vers le bas dans l'enceinte 31 et vers le haut dans l'enceinte 32.

Par ailleurs, le fourreau présente également au niveau de sa partie supérieure une ouverture 30c disposée au regard du canal 33 qui s'étend radialement vers l'extérieur et dans l'épaisseur du flasque 8 pour permettre une circulation du liquide ainsi chauffé en direction de l'extérieur de l'élément filtrant 4 et ce au niveau du flasque supérieur 8. Le liquide ou gazole ainsi chauffé circule dans l'espace annulaire 6, en amont de l'élément filtrant 4, du haut vers le bas, ce qui permet une meilleure séparation de l'eau avec le gazole, l'eau étant alors entraînée vers le bas, à la fois par la circulation du gazole de haut en bas et par l'effet de la gravité s'exerçant sur les particules d'eau plus dense que le gazole, en direction du fond 2a de la cuve métallique 2, vers l'espace de récupération d'eau 43. Selon ce mode de réalisation, le conduit de sortie 40 est également connecté avec la sortie de liquide 3b via le conduit de circulation 27 directement réalisée dans l'épaisseur du flasque 8. Selon ce mode de réalisation, le flasque inférieur 21 de l'élément filtrant 4 est raccordé de manière étanche à l'extrémité inférieure du tube séparateur 9.

Le gazole ou liquide à chauffer et à filtrer entre donc par l'entrée de liquide 3a puis dans l'ouverture ou passage 29 réalisé sur la face supérieure du flasque 8 puis circule dans le conduit d'entrée 39 en descendant dans l'enceinte 31 puis en montant dans l'enceinte 32 entre l'élément chauffant 15 et le fourreau 30. Le gazole ou liquide ainsi chauffé passe ensuite dans le canal 33 réalisé dans l'épaisseur du flasque 8 pour être dirigé radialement vers l'extérieur et en haut de l'élément filtrant 4. Le gazole ou liquide ainsi chauffé descend alors vers le bas pour traverser ledit élément filtrant radialement de l'extérieur vers l'intérieur avant de déboucher dans la zone d'aval puis de ressortir par la sortie de liquide 3b via le conduit de circulation 27.

Selon ce mode de réalisation représenté sur la figure 4, le connecteur 14 des moyens de réchauffage électrique est également monté de manière étanche et amovible à l'intérieur de la jupe 18 rapportée de manière fixe et étanche sur le couvercle 3.

Le fond du fourreau 30 présente un orifice 30d pour permettre le passage de l'extrémité inférieure de la carte de circuit imprimé 41 pourvue de moyens de détection d'eau 42 disposés dans l'espace de récupération d'eau 43, au voisinage du fond 2a de la cuve 2.

Dans ce mode de réalisation, bien que cela ne soit pas préféré, la paroi cylindrique 9a du tube séparateur 9 pourrait être omise. Le fourreau ferait alors office de tube séparateur entre le conduit d'entrée 39 et le conduit de sortie 40 (entre la zone d'amont 10 et la zone d'aval 11) et il faudrait prévoir des moyens d'étanchéité entre le flasque inférieur 21 et le fourreau 30. Le filet hélicoïdal 9e serait alors avantageusement maintenu sur l'extérieur du fourreau 30 ou omis. Dans ce dernier cas, il serait alors préférable de prévoir des moyens de centrage de l'élément filtrant 4, afin de reprendre la fonction du filet hélicoïdal.

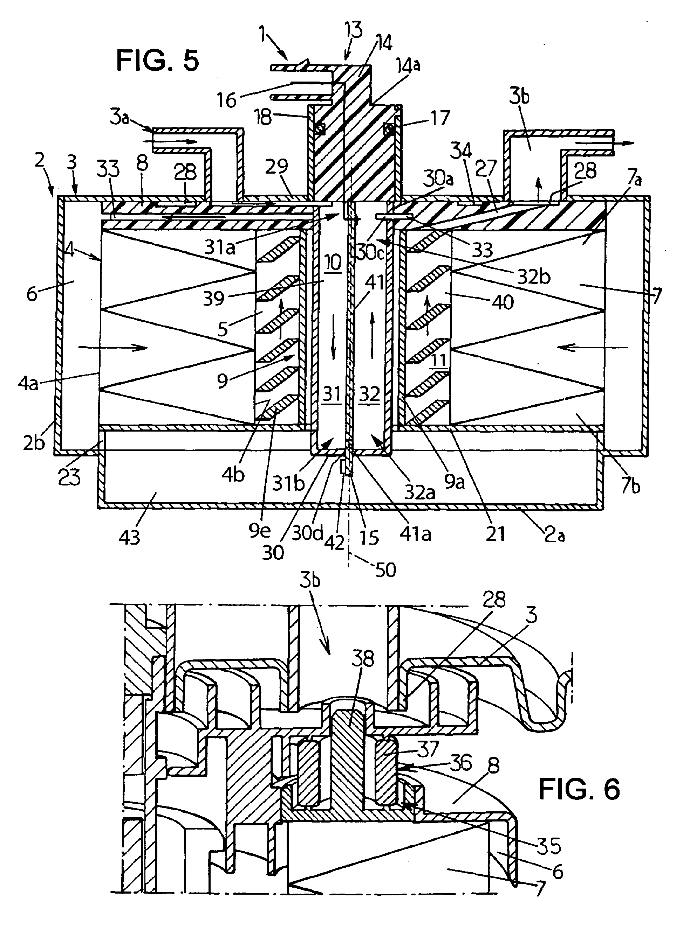

La figure 5 représente une variante du mode de réalisation représenté sur la figure 4. Selon cette variante de réalisation, l'élément filtrant 4 présente un diamètre externe plus important, ce qui permet de réaliser une rainure 28 qui peut être circulaire sur la surface supérieure du flasque 8. Cette rainure circulaire définit avec le couvercle 3, un canal circulaire étanche disposé en regard de la sortie de liquide 3b. Par ailleurs, le conduit de circulation 27 débouche également dans la rainure circulaire 28. La surface supérieure du flasque 8 comprend également une rainure circulaire 34 présentant un diamètre inférieur à celui de la rainure 28, cette rainure circulaire formant également un canal circulaire étanche qui est disposé en regard de l'entrée de liquide 3a tout en étant connecté au passage 29 qui permet une communication étanche entre l'entrée de liquide 3a et la zone d'amont 10. La présence de ces canaux circulaires étanches 28 et 34 permettent donc d'éviter toute indexation angulaire entre le flasque supérieur et les entrée et sortie de liquide 3a, 3b.

Bien entendu, selon le mode de réalisation de la figure 4 de celui représenté à la figure 5, des joints d'étanchéité peuvent également être disposés entre le flasque supérieur et le couvercle 3 afin d'assurer une étanchéité entre les zones d'amont 10 et d'aval 11.

Dans les modes de réalisation des figures 4 et 5, le fait de disposer le ou les éléments chauffants uniquement sur une seule face de la plaque 41 ne nuit pas aux échanges thermiques lors de la double mise en contact du carburant du liquide à filtrer avec la plaque 41, puisque par conduction thermique au travers de la plaque, la chaleur générée par les éléments chauffants est également conduite thermiquement jusque sur la face de la plaque qui ne porte pas les élément chauffants. Par conséquent, une face de la plaque qui ne porte pas d'éléments chauffants diffuse quand même de l'énergie calorifique au carburant qui la parcourt d'ou l'intérêt de préserver une double mise en contact.

Comme on peut le voir sur la figure 6, le flasque supérieur 8 peut également présenter un autre conduit 35 qui communique avec la sortie de liquide 3b et qui débouche également dans la rainure circulaire 28 réalisée sur la surface supérieure du flasque supérieur 8 et qui forme le canal circulaire étanche avec le couvercle 3. Ce conduit 35 permet une communication entre la sortie de liquide 3b et la zone d'amont 10 qui comprend l'espace annulaire 6. Ce conduit 35 sert à loger un dispositif de dégazage 36 comprenant par exemple un poral 37 formé par une pièce annulaire poreuse réalisée par frittage (ce poral 37 permet d'arrêter les impuretés pouvant être contenues dans le mélange gazole et air), ainsi qu'un gicleur 38 comportant des rainures calibrées pour laisser s'échapper, directement vers l'aval du filtre, un filet d'air calibré ne perturbant pas l'injection du moteur à combustion interne disposé en aval du filtre.

Bien entendu, comme dans tous les modes de réalisation préalablement décrits, la plaque de circuit imprimée 41 peut être pourvue d'un détecteur de pression et de moyens de détection d'eau 42 dans sa partie inférieure.

De plus, le connecteur 14 conforme à l'ensemble des modes de réalisation préalablement décrits peut être pourvu d'une zone de rupture 14a sur sa partie extérieure située au-delà de la jupe 18 ou de la paroi 12 afin d'éviter que le connecteur ne se fissure ou se casse à l'intérieur de la jupe 18 ou de la paroi 12 ce qui aurait alors pour conséquence de créer des fuites de liquide/gazole vers l'extérieur du système de filtration 1.

De plus, le flasque supérieur 8 de l'élément filtrant pourvu d'un conduit de circulation ou d'un conduit pour le système de dégazage peut être utilisé indépendamment des moyens de réchauffage montés de manière amovible sur le couvercle. De même, le connecteur 14 pourvu des passages 19 et 20 peut être utilisé indépendamment des conduits réalisés sur et dans le flasque supérieur 8 de l'élément filtrant.

## Revendications

1. Système de filtration de liquide comportant :
- une cuve métallique (2) sur laquelle est fixé un couvercle (3) pour former un boîtier délimitant un volume intérieur,
- un élément filtrant (4) disposé dans le volume intérieur du boîtier, ledit élément filtrant (4) présente une forme sensiblement annulaire et comporte une face externe (4a) et une face interne (4b), l'élément filtrant (4) définit un espace intérieur creux (5) et délimite une zone d'amont (10) communiquant avec une entrée de liquide (3a) et une zone d'aval (11) communiquant avec une sortie de liquide (3b),
- un premier conduit (39) s'étendant dans la zone d'amont (10) et dans l'espace intérieur creux (5), le premier conduit (39) étant relié de manière étanche à l'entrée de liquide (3a),
- un deuxième conduit (40) s'étendant dans la zone d'aval (11) et relié de manière étanche à la sortie de liquide (3b),
- un espace annulaire (6) s'étendant autour de la face externe (4a) de l'élément filtrant,
- des moyens de réchauffage (13) du liquide montés de manière amovible et étanche sur le boîtier (2 ; 3), lesdits moyens de réchauffage comprenant un élément chauffant (15) qui s'étend dans l'espace intérieur creux (5), dans le premier conduit (39),
**caractérisé en ce que :**
- l'espace annulaire (6) est relié au premier conduit (39) par un conduit intermédiaire (33) et ledit espace annulaire (6) s'étend dans la zone d'amont (10),
- le deuxième conduit (40) s'étend dans l'espace intérieur creux (5), de telle sorte que le liquide traverse l'élément filtrant (4) radialement depuis la face externe (4a) vers la face interne (4b) pour déboucher dans la zone d'aval (11), et
- l'entrée de liquide (3a), la sortie de liquide (3b) et le conduit intermédiaire sont situés du même côté (au-dessus) par rapport à l'élément filtrant (4).

2. Système selon la revendication 1, dans lequel :
- le premier conduit (39) comprend une première portion (31) et une deuxième portion (32) définissant des enceintes,
- la première portion (31) du premier conduit (39) présente une extrémité supérieure (31a) reliée à l'entrée de liquide (3a) et une extrémité inférieure (31b),
- la deuxième portion (32) du premier conduit (39) présente une extrémité supérieure (32b) reliée au conduit intermédiaire (33) et une extrémité inférieure (32a),
- la première portion (31) et la deuxième portion (32) du premier conduit (39) sont séparées par une plaque de séparation (41) présentant un orifice (41a), et
- l'extrémité inférieure (31b) de la première portion (31) du premier conduit (39) et l'extrémité inférieure (32a) de la deuxième portion (32) du premier conduit (39) sont reliées par l'orifice (41a) de la plaque de séparation (41).

3. Système selon la revendication 2, dans lequel l'élément chauffant (15) est disposé sur la plaque de séparation (41) pour réchauffer le liquide sur les deux faces de la plaque de séparation (41).

4. Système selon la revendication 3, dans lequel l'élément chauffant est disposé uniquement dans la deuxième portion (32) du premier conduit (39).

5. Système selon l'une quelconque des revendications 2 à 4, dans lequel l'élément filtrant (4) s'étend entre une extrémité inférieure (7b) pourvue d'un flasque inférieur (21) et une extrémité supérieure (7a) pourvue d'un flasque supérieur (8) et le conduit intermédiaire (33) s'étend radialement dans l'épaisseur du flasque supérieur (8).

6. Système selon la revendication 5, dans lequel l'orifice (41a) de la plaque de séparation (41) est à proximité de l'extrémité inférieure (7b) de l'élément filtrant (4).

7. Système selon l'une quelconque des revendications 2 à 6, comprenant en outre un fourreau (30) renfermant la première portion (31) du premier conduit (39), la deuxième portion (32) du premier conduit (39), la plaque de séparation (41) et l'élément chauffant (15).

8. Système selon la revendication 7, dans lequel le fourreau (30) présente un orifice (30d), la plaque de séparation (41) s'étend au-delà du fourreau (30) en passant de manière étanche à travers l'orifice (30d) et porte des moyens de détection d'eau (42) s'étendant à l'extérieur du fourreau (30), dans un espace de récupération d'eau (43), ledit espace de récupération d'eau (43) communiquant avec l'espace annulaire (6) et s'étendant dans la zone d'amont (10), au fond de la cuve (2).

9. Système selon l'une quelconque des revendications précédentes, dans lequel les moyens de réchauffage (13) comprennent en outre un connecteur (14) monté de manière amovible dans une jupe (12 ; 18) formée sur le couvercle (3) auquel est directement connecté le connecteur (14).

10. Système selon la revendication 9 lorsqu'elle dépend de la revendication 7, dans lequel le fourreau (30) est solidaire du connecteur (14) des moyens de réchauffage (13).

11. Système selon la revendication 9 ou la revendication 10, dans lequel l'entrée et la sortie de liquide (3a, 3b) sont réalisées sur la jupe (12 ; 18) rapportée de manière étanche dans une ouverture pratiquée sur le couvercle (3), le connecteur (14) comprenant des passages (19, 20) pour relier de manière étanche l'entrée de liquide (3a) à la zone d'amont (10) et la sortie de liquide (3b) à la zone d'aval (11).

12. Système selon l'une quelconque des revendications 1 à 10, dans lequel l'entrée et la sortie de liquide (3a, 3b) sont réalisées sur le couvercle (3).

13. Système selon l'une quelconque des revendications précédentes, dans lequel l'élément chauffant (15) se présente sous la forme d'une plaque de circuit imprimé sur laquelle est réalisée au moins une piste de cuivre chauffante.

14. Système selon l'une quelconque des revendications 1 à 12, dans lequel l'élément chauffant (15) se présente sous la forme d'une plaque de circuit imprimé (41) et comprend une résistance chauffante (12).

15. Système selon la revendication 13 ou la revendication 14, dans lequel la plaque de circuit imprimé (41) comprend en outre des moyens de détection d'eau et/ou de pression et/ou de température.

16. Système selon l'une quelconque des revendications précédentes dans lequel le premier conduit (39) et le deuxième conduit (40) sont séparés par un tube séparateur (9).

17. Système selon la revendication 16, dans lequel l'élément filtrant (4) comprend des extrémités supérieure (7a) et inférieure (7b), et le tube séparateur (9) présente une première extrémité (9c) reliée de manière étanche à l'entrée de liquide (3a) et une seconde extrémité ouverte qui est solidaire de manière étanche avec l'extrémité inférieure (7b) de l'élément filtrant (4) de telle sorte que le liquide circule entre l'élément filtrant (4) et la cuve métallique (2) avant de traverser l'élément filtrant (4) radialement depuis l'extérieur vers l'intérieur.

18. Système selon l'une quelconque des revendications précédentes, dans lequel l'élément filtrant (4) s'étend entre une extrémité inférieure (7b) pourvue d'un flasque inférieur (21) et une extrémité supérieure (7a) pourvue d'un flasque supérieur (8) qui comprend au moins un conduit de circulation (27) de liquide qui s'étend sur toute l'épaisseur du flasque (8) et qui est raccordé de manière étanche à l'une et/ou à l'autre des entrée et sortie de liquide (3a,3b).

19. Système selon la revendication 18, dans lequel la surface supérieure (8) du flasque supérieur est en contact étanche avec le couvercle (3).

20. Système selon la revendication 19, dans lequel la surface supérieure (8) du flasque supérieur comprend au moins une première rainure (28) qui forme avec le couvercle (3) un premier canal étanche qui est disposé en regard de la sortie de liquide (3b), le conduit de circulation de liquide (27) débouchant en outre dans le premier canal.

21. Système selon la revendication 20, dans lequel la première rainure (28) présente une forme circulaire.

22. Système selon l'une quelconque des revendications 19 à 21, dans lequel le flasque supérieur (8) comprend, en outre, un conduit (35) qui communique avec la sortie de liquide (3b) et la zone d'amont (11), et qui loge un dispositif de dégazage (36).

23. Système selon l'une quelconque des revendications 19 à 22, dans lequel la surface supérieure du flasque supérieur (8) comprend une deuxième rainure (34) qui forme avec le couvercle (3) un deuxième canal étanche qui est disposé en regard de l'entrée de liquide (3a), le deuxième canal débouchant dans la zone d'amont (10) où sont disposés les moyens de réchauffage (13) du liquide.

24. Système selon la revendication 23, dans lequel la deuxième rainure (34) présente une forme circulaire.

25. Système selon la revendication 23 ou la revendication 24, dans lequel un fourreau (30) est disposé à l'intérieur du tube séparateur (9).

## Claims

1. Fluid filtering system, comprising:
- a metal vessel (2) on which a cover (3) is secured in order to form a case which delimits an inner volume;
- a filtering element (4) which is disposed in the inner volume of the case, the said filtering element (4) has a substantially annular form, and comprises an outer surface (4a) and an inner surface (4b), the filtering element (4) defines a hollow inner space (5) and delimits an upstream area (10) which communicates with a fluid intake (3a) and a downstream area (11) which communicates with a fluid outlet (3b);
- a first duct (39) which extends in the upstream area (10) and in the hollow inner space (5), the first duct (39) being connected in a sealed manner to the fluid intake (3a);
- a second duct (40) which extends in the downstream area (11) and is connected in a sealed manner to the fluid outlet (3b);
- an annular space (6) which extends around the outer surface (4a) of the filtering element;
- means (13) for heating the fluid which are fitted in a detachable and sealed manner on the case (2; 3), the said heating means comprising a heating element (15) which extends in the hollow inner space (5), in the first duct (39),
**characterised in that**:
- the annular space (6) is connected to the first duct (39) by an intermediate duct (33) and the said annular space (6) extends in the upstream area (10);
- the second duct (40) extends in the hollow inner space (5), such that the fluid passes through the filtering element (4) radially from the outer surface (4a) to the inner surface (4b) in order to open into the downstream area (11); and
- the fluid intake (3a), the fluid outlet (3b) and the intermediate duct are situated on the same side (above) relative to the filtering element (4).

2. System according to claim 1, wherein:
- the first duct (39) comprises a first portion (31) and a second portion (32) which define enclosures;
- the first portion (31) of the first duct (39) has an upper end (31a) which is connected to the fluid intake (3a) and a lower end (31b);
- the second portion (32) of the first duct (39) has an upper end (32b) which is connected to the intermediate duct (33) and a lower end (32a);
- the first portion (31) and the second portion (32) of the first duct (39) are separated by a separation plate (41) which has an aperture (41a); and
- the lower end (31b) of the first portion (31) of the first duct (39) and the lower end (32a) of the second portion (32) of the first duct (39) are connected by the aperture (41a) in the separation plate.

3. System according to claim 2, wherein the heating element (15) is disposed on the separation plate (41) in order to heat the fluid on the two surfaces of the separation plate (41).

4. System according to claim 3, wherein the heating element is disposed only in the second portion (32) of the first duct (39).

5. System according to any one of claims 2 to 4, wherein the filtering element (4) extends between a lower end (7b) which is provided with a lower flange (21) and an upper end (7a) which is provided with an upper flange (8), and the intermediate duct (33) extends radially in the thickness of the upper flange (8).

6. System according to claim 5, wherein the aperture (41a) in the separation plate (41) is in the vicinity of the lower end (7b) of the filtering element (4).

7. System according to any one of claims 2 to 6, additionally comprising a sleeve (30) which contains the first portion (31) of the first duct (39), the second portion (32) of the first duct (39), the separation plate (41) and the heating element (15).

8. System according to claim 7, wherein the sleeve (30) has an aperture (30d), the separation plate (41) extends beyond the sleeve (30) whilst passing in a sealed manner through the aperture (30d), and bears means (42) for detection of water which extend on the exterior of the sheath (30), in a water recuperation space (43), the said water recuperation space (43) communicating with the annular space (6) and extending into the upstream area (10), at the base of the vessel (2).

9. System according to any one of the preceding claims, wherein the heating means (13) additionally comprise a connector (14) which is fitted in a detachable manner in a skirt (12; 18) formed on the cover (3), to which the connector (14) is connected directly.

10. System according to claim 9 when it is dependent on claim 7, wherein the sleeve (30) is integral with the connector (14) of the heating means (13).

11. System according to claim 9 or claim 10, wherein the fluid intake and outlet (3a, 3b) are provided on the skirt (12; 18), added in a sealed manner into an opening which is provided in the cover (3), the connector (14) comprising passages (19, 20) to connect the fluid intake (3a) in a sealed manner to the upstream area (10), and to connect the fluid outlet (3b) to the downstream area (11).

12. System according to any one of claims 1 to 10, wherein the fluid intake and outlet (3a, 3b) are provided on the cover (3).

13. System according to any one of the preceding claims, wherein the heating element (15) is in the form of a printed circuit board on which at least one copper heating track is provided.

14. System according to any one of claims 1 to 12, wherein the heating element (15) is in the form of a printed circuit board (41) and comprises a heating resistor (12).

15. System according to claim 13 or claim 14, wherein the printed circuit board (41) additionally comprises means for detection of water and/or pressure and/or temperature.

16. System according to any one of the preceding claims, wherein the first duct (39) and the second duct (40) are separated by a separator tube (9).

17. System according to claim 16, wherein the filtering element (4) comprises upper (7a) and lower (7b) ends, and the separator tube (9) has a first end (9c) which is connected in a sealed manner to the fluid intake (3a), and a second, open end which is integral in a sealed manner with the lower end (7b) of the filtering element (4), such that the fluid circulates between the filtering element (4) and the metal vessel (2) before passing through the filtering element (4) radially from the exterior towards the interior.

18. System according to any one of the preceding claims, wherein the filtering element (4) extends between a lower end (7b) provided with a lower flange (21) and an upper end (7a) provided with an upper flange (8) which comprises at least one fluid circulation duct (27) that extends through the entire thickness of the flange (8) and is connected in a sealed manner to one/and or the other of the fluid intake and outlet (3a, 3b).

19. System according to claim 18, wherein the upper surface (8) of the upper flange is in sealed contact with the cover (3).

20. System according to claim 19, wherein the upper surface (8) of the upper flange comprises at least a first groove (28) which forms together with the cover (3) a first sealed channel which is disposed opposite the fluid outlet (3b), the fluid circulation duct (27) additionally opening into the first channel.

21. System according to claim 20, wherein the first groove (28) has a circular form.

22. System according to any one of claims 19 to 21, wherein the upper flange (8) additionally comprises a duct (35) which communicates with the fluid outlet (3b) and the upstream area (11), and which accommodates a degassing device (36).

23. System according to any one of claims 19 to 22, wherein the upper surface of the upper flange (8) comprises a second groove (34) which forms together with the cover (3) a second sealed channel which is disposed opposite the fluid intake (3a), the second channel opening into the upstream area (10) where the means (13) for heating of the fluid are disposed.

24. System according to claim 23, wherein the second groove (34) has a circular form.

25. System according to claim 23 or claim 24, wherein a sleeve (30) is disposed inside the separator tube (9).

## Patentansprüche

1. Filtersystem für Flüssigkeit, das aufweist:
- einen Metallbehälter (2), an dem ein Deckel (3) befestigt ist, um ein Gehäuse auszubilden, das ein Innenvolumen begrenzt,
- ein Filterelement (4), das sich im Innenvolumen des Gehäuses befindet, wobei das Filterelement (4) im Wesentlichen Ringform aufweist und eine Außenfläche (4a) und eine Innenfläche (4b) hat, wobei das Filterelement (4) einen hohlen Innenraum (5) definiert und einen stromaufwärts liegenden Bereich (10), der mit einem Flüssigkeitseintritt (3a) in Verbindung steht, und einen stromabwärts liegenden Bereich (11), der mit einem Flüssigkeitsaustritt (3b) in Verbindung steht, abgrenzt,
- eine erste Leitung (39), die sich in dem stromaufwärts liegenden Bereich (10) und in dem hohlen Innenraum (5) erstreckt, wobei die erste Leitung (39) in abgedichteter Weise mit dem Flüssigkeitseintritt (3a) verbunden ist,
- eine zweite Leitung (40), die sich in dem stromabwärts liegenden Bereich (11) erstreckt und die in abgedichteter Weise mit dem Flüssigkeitsaustritt (3b) verbunden ist,
- ein Ringraum (6), der sich um die Außenfläche (4a) des Filterelements erstreckt,
- eine Heizeinrichtung (13) für Flüssigkeit, die lösbar und abgedichtet an dem Gehäuse (2; 3) montiert ist, wobei die Heizeinrichtung in der ersten Leitung (39) ein Heizelement (15) aufweist, das sich in den hohlen Innenraum (5) erstreckt,
**dadurch gekennzeichnet, dass**
- der Ringraum (6) mit der ersten Leitung (39) durch eine Zwischenleitung (33) verbunden ist und sich der Ringraum (6) in dem stromaufwärts liegenden Bereich (10) erstreckt,
- sich die zweite Leitung (40) in dem hohlen Innenraum (5) in der Weise erstreckt, dass die Flüssigkeit das Filterelement (4) radial von der Außenfläche (4a) zur Innenfläche (4b) durchquert, um in den stromabwärts liegenden Bereich (11) zu münden, und
- der Flüssigkeitseintritt (3a), der Flüssigkeitsaustritt (3b) und die Zwischenleitung an der gleichen Seite (oberhalb) in Bezug auf das Filterelement (4) angeordnet sind.

2. System nach Anspruch 1, bei dem
- die erste Leitung (39) einen ersten Abschnitt (31) und einen zweiten Abschnitt (32) aufweist, die Umhüllungen definieren,
- wobei der erste Abschnitt (31) der ersten Leitung (39) einen oberen Endabschnitt (31 a), der mit dem Flüssigkeitseintritt (3a) verbunden ist, und einen unteren Endabschnitt (31 b) aufweist,
- wobei der zweite Abschnitt (32) der ersten Leitung (39) einen oberen Endabschnitt (32b), der mit der Zwischenleitung (33) verbunden ist, und einen unteren Endabschnitt (32a) aufweist,
- wobei der erste Abschnitt (31) und der zweite Abschnitt (32) der ersten Leitung (39) durch eine Trennplatte (41) mit einer Öffnung (41 a) verbunden sind, und
- wobei der untere Endabschnitt (31b) des ersten Abschnitts (31) der ersten Leitung (39) und der untere Endabschnitt (32a) des zweiten Abschnitts (32) der ersten Leitung (39) durch die Öffnung (41a) der Trennplatte (41) verbunden sind.

3. System nach Anspruch 2, bei dem sich das Heizelement (15) an bzw. auf der Trennplatte (41) befindet, um die Flüssigkeit an zwei Flächen der Trennplatte (41) zu erwärmen.

4. System nach Anspruch 3, bei dem das Heizelement allein in dem zweiten Abschnitt (32) der ersten Leitung (39) angeordnet ist.

5. System nach einem der Ansprüche 2 bis 4, bei dem sich das Filterelement (4) zwischen einem unteren Endabschnitt (7b), der mit einer unteren Wange (21) versehen ist, und einem oberen Endabschnitt (7a), der mit einer oberen Wange (8) versehen ist, erstreckt und wobei sich die Zwischenleitung (33) radial in der Dicke der oberen Wange (8) erstreckt.

6. System nach Anspruch 5, bei dem die Öffnung (41 a) der Trennplatte in der Nähe des unteren Endabschnitts (7b) des Filterelements (4) ist.

7. System nach einem der Ansprüche 2 bis 6, das ferner eine Hülse (30) aufweist, die den ersten Abschnitt (31) der ersten Leitung (39), den zweiten Abschnitt (32) der ersten Leitung (39), die Trennplatte (41) und das Heizelement (15) enthält.

8. System nach Anspruch 7, bei dem die Hülse (30) eine Öffnung (30d) aufweist, die Trennplatte (41) sich von der Hülse (30) her erstreckt, um in abgedichteter Weise über die Öffnung (30d) zu verlaufen, und eine Einrichtung (42) zum Erfassen von Wasser, die sich außerhalb der der Hülse (30) erstreckt, in einem Raum (43) zum Sammeln von Wasser trägt, wobei der Raum (43) zum Sammeln von Wasser mit dem Ringraum (6) in Verbindung steht und sich am Boden des Behälters (2) in dem stromaufwärts liegenden Bereich (10) erstreckt.

9. System nach einem der vorhergehenden Ansprüche, wobei die Heizeinrichtung (13) ferner eine Verbindungseinrichtung (14) aufweist, die lösbar in einem Mantel (12; 18) montiert ist, der an dem Deckel (3) ausgebildet ist, mit dem die Verbindungseinrichtung (14) direkt verbunden ist.

10. System nach Anspruch 9, wenn dieser von Anspruch 7 abhängt, bei dem die Hülse (30) mit der Verbindungseinrichtung (14) der Heizeinrichtung (13) fest verbunden ist.

11. System nach Anspruch 9 oder 10, bei dem der Eintritt und Austritt von Flüssigkeit (3a, 3b) an dem Mantel (12; 18) umgesetzt sind, der in abgedichteter Weise in einer an dem Deckel (3) ausgeführten Öffnung angebracht ist, wobei die Verbindungseinrichtung (14) Kanäle (19, 20) aufweist, um in abgedichteter Weise den Flüssigkeitseintritt (3a) mit dem stromaufwärts liegenden Bereich (10) und den Flüssigkeitsaustritt (3b) mit dem stromabwärts liegenden Bereich (11) zu verbinden.

12. System nach einem der Ansprüche 1 bis 10, bei dem der Eintritt und der Austritt für Flüssigkeit (3a, 3b) an dem Deckel (3) umgesetzt sind.

13. System nach einem der vorhergehenden Ansprüche, bei dem das Heizelement (15) in Form einer gedruckten Schaltungsplatte ausgeführt ist, an der zumindest eine Kupfer-Heizbahn umgesetzt ist.

14. System nach einem der Ansprüche 1 bis 12, bei dem das Heizelement (15) in Form einer gedruckten Schaltungsplatte (41) ausgeführt ist und einen Heizwiderstand (12) aufweist.

15. System nach Anspruch 13 oder 14, bei dem die gedruckte Schaltungsplatte (41) ferner eine Erfassungseinrichtung für Wasser und/oder Druck und/oder der Temperatur aufweist.

16. System nach einem der vorhergehenden Ansprüche, bei dem die erste Leitung (39) und die zweite Leitung (40) durch ein Trennrohr (9) getrennt sind.

17. System nach Anspruch 16, bei dem das Filterelement (4) einen oberen Endabschnitt (7a) und einen unteren Endabschnitt (7b) aufweist und das Trennrohr (9) einen ersten Endabschnitt (9c), der in abgedichteter Weise mit dem Eintritt (3a) von Flüssigkeit verbunden ist, und einen zweiten offenen Endabschnitt aufweist, der in abgedichteter Weise mit dem unteren Endabschnitt (7b) des Filterelements (4) in der Weise verbunden ist, dass die Flüssigkeit zwischen dem Filterelement (4) und dem Metallbehälter (2) umläuft, bevor das Filterelement (4) radial von außen nach innen durchquert wird.

18. System nach einem der vorhergehenden Ansprüche, bei dem sich das Filterelement (4) zwischen dem unteren Endabschnitt (7b), der mit einer unteren Wange (21) versehen ist, und einem oberen Endabschnitt (7a) erstreckt, der mit einer oberen Wange (8) versehen ist, die zumindest eine Umlaufleitung (27) für Flüssigkeit aufweist, die sich über die gesamte Dicke der Wange (8) erstreckt und die sich in abgedichteter Weise an den einen und/oder anderen von Eintritt und Austritt für Flüssigkeit (3a, 3b) abschließt.

19. System nach Anspruch 18, bei dem die obere Fläche (8) der oberen Wange mit dem Deckel (3) in dichtem Kontakt steht.

20. System nach Anspruch 19, bei dem die obere Fläche (8) der oberen Wange zumindest eine erste Nut (28) aufweist, die mit dem Deckel (3) einen ersten dichten Kanal bildet, der dem Austritt (3b) von Flüssigkeit zugewandt ist, wobei die Umlaufleitung (27) von Flüssigkeit ferner in den ersten Kanal mündet.

21. System nach Anspruch 20, bei dem die erste Nut (28) Kreisform aufweist.

22. System nach einem der Ansprüche 19 bis 21, bei dem die obere Wange (8) ferner eine Leitung (35) aufweist, die mit dem Austritt von Flüssigkeit (3b) und dem stromaufwärts liegenden Bereich (11) verbunden ist und in der eine Entgasungsvorrichtung (36) untergebracht ist.

23. System nach einem der Ansprüche 19 bis 22, bei dem die obere Fläche der oberen Wange (8) eine zweite Nut (34) aufweist, die mit dem Deckel (3) einen zweiten dichten Kanal ausbildet, der dem Eintritt von Flüssigkeit (3a) zugewandt ist, wobei der zweite Kanal in den stromaufwärts liegenden Bereich (10) mündet, wo die Heizeinrichtung (13) für die Flüssigkeit angeordnet ist.

24. System nach Anspruch 23, bei dem die zweite Nut (34) Kreisform aufweist.

25. System nach Anspruch 23 oder 24, bei dem eine Hülse (30) im Inneren des Trennrohres (9) angeordnet ist.
